# EUROPEAN PATENT APPLICATION

(11) **EP 4 410 422 A1**
(43) Date of publication of application: **07.08.2024**
(21) Application number: 22876880.0
(22) Date of filing: 29.09.2022
(51) Int. Cl.: B01J 23/42, B01J 21/04, B01J 37/04, B01J 37/02, B01J 37/08, B01J 37/16, C01B 3/00

(54) **PLATINUM-SUPPORTED CATALYST WITH IMPROVED HYDROGENATION/DEHYDROGENATION REVERSIBILITY AND HYDROGEN STORAGE AND RELEASE METHOD BASED ON LIQUID ORGANIC HYDROGEN CARRIER USING SAME**

(30) Priority: 29.09.2021 KR 20210128547; 23.12.2021 KR 20210185870
(71) Applicant: IUCF-HYU (Industry-University Cooperation Foundation Hanyang University), Seoul 04763 (KR)
(72) Inventor: SUH, Young Woong, Seoul 06069 (KR); OH, Jin Ho, Daejeon 34074 (KR); JO, Young In, Seoul 04760 (KR); KIM, Tae Wan, Incheon 21949 (KR)
(74) Representative: dompatent von Kreisler Selting Werner - Partnerschaft von Patent- und Rechtsanwälten mbB
(86) International application number: PCT/KR2022/014625
(87) International publication number: WO 2023/055108

(57) **Abstract**

Disclosed are: a hydrogenation/dehydrogenation catalyst in which a platinum (Pt) metal as an active metal, in which a single atom and a cluster form are mixed, is supported on an alumina support on the basis of a solid phase method; and a method for reversibly storing and releasing hydrogen with high selective conversion and high efficiency by using same.

## Description

### [Technical Field]

The present disclosure relates to a platinum-supported catalyst with improved hydrogenation/dehydrogenation reversibility and a method for storing and releasing hydrogen based on a liquid organic hydrogen carrier using the same. More particularly, the present disclosure relates to a hydrogenation/dehydrogenation catalyst in which platinum (Pt) metal with platinum single atoms and clusters mixed, as an active metal, is supported on an alumina support based on solid-state reaction, and to a method for reversibly storing and releasing hydrogen with high selective conversion and high efficiency using the same.

### [Background Art]

As environmental pollution problems, such as decreased reserves of fossil fuels, global warming caused by carbon dioxide and pollutants generated during combustion, and the like, are becoming more serious, global interest in and demand for development of alternative energy is explosively increasing.

As alternative energy sources, renewable energy such as wind power, tidal power, geothermal energy, hydrogen energy, solar energy, etc. is in the spotlight, and each of the energy sources listed above has advantages and disadvantages. In this regard, efficient demand and supply of renewable energy are difficult due to instability of energy sources depending on time and the natural environment, so in order to effectively replace conventional fossil fuels, there is a need to develop technology for storing and supplying surplus energy such that energy may be stably supplied.

From this perspective, hydrogen energy is receiving particular attention because it (i) has the highest energy efficiency per unit mass, (ii) generates only water and no other harmful byproducts upon combustion, (iii) is advantageous in view of reuse because water, the main source of hydrogen, is abundant in nature and conversion into water after use is possible, and (iv) is suitable for attaining competitiveness in the precision industry and IT industry with distributed energy resources that use hydrogen as fuel. Moreover, hydrogen may be produced using other renewable energy such as solar energy, wind power, etc. and may be widely applied not only to various energy sources but also to other industrial fields (e.g., various petrochemical fields), and is emerging as a key energy source of the future at home and abroad.

In general, research and development of hydrogen energy is largely divided into fields of hydrogen production, transportation, and storage. Hydrogen has excellent energy storage capacity by mass, but low energy storage capacity by volume, so technology for efficiently storing hydrogen is the biggest obstacle to the practical use of hydrogen energy. For example, materials having a mass storage density of 10 wt% or more at 77 K are known, but the volume storage density of these materials is 40 g/L, which is low for use as an actual hydrogen storage material. Therefore, thorough research is underway into technology for storing as much hydrogen as possible in a storage medium that is as light and compact as possible.

In this regard, many countries have invested a lot of money in research and development over the years, and efficient hydrogen storage methods that have been researched and developed to date are the CGH2 method, which compresses hydrogen using a pressure of 700 bar, and the LH2 method, which stores liquid hydrogen by liquefaction at -253°C. However, this pressurization or liquefaction method must maintain a low temperature, and the density of liquid hydrogen is also low to the level of 71.2 kg/m³.

As an alternative, materials having hydrogen storage capacity, for example, porous organic or inorganic nanomaterials such as metal-organic frameworks (MOFs), carbon nanotubes, zeolites, activated carbon, etc., metal hydrides, and the like, are receiving attention as materials that effectively store hydrogen energy (Nature, 427, 523 (2004); J. Am. Chem. Soc., 127, 14904 (2005); Japanese Patent Application Publication Nos. 2008-95172, 2011-131120, etc.). However, in cases of room-temperature gaseous hydrogen storage technology by physical absorption of porous nanomaterials including MOFs, the energy storage density is relatively low and the energy required for storage and desorption of hydrogen is relatively large, making miniaturization and modularization difficult.

Recently, hydrogen storage technology has been developed by reversible catalytic hydrogenation/dehydrogenation using organic materials, for example liquid organic hydrogen carriers (LOHCs) (U.S. Patent No. 7,901,491, etc.). LOHC technology has advantages of being able not only to store 5 wt% or more of hydrogen, which is recommended by the U.S. Department of Energy (DOE), but also to operate in a low pressure range, easily regenerate stored materials, and the like. Moreover, it is possible to provide a practical hydrogen storage system that allows efficient transportation and storage using existing liquid fuel transportation and storage infrastructure due to advantages of liquid fossil fuels such as ease of handling and high energy density (Energy Rev., 6 (2002) 141, Energy Environ. Sci., 8 (2015) 1035-1045).

There is known technology using pi-conjugated substrate compounds as LOHC materials (e.g., U.S. Patent No. 7,351,395, etc.), but it is difficult to obtain consistent reactivity due to pi-conjugation, and the compounds mostly exist as solids and are thus used in form of a mixture. In order to alleviate such difficulties, technology using benzyltoluene and dibenzyltoluene as hydrogen storage materials is also known (e.g., Korean Patent Application Publication No. 2015-97558, etc.). These hydrogen carriers exist in liquid form at room temperature and have a boiling point of 280°C or higher, so there are few restrictions in view of utilization, but there are limits to increasing the hydrogenation and dehydrogenation efficiency attributed to limitations in the hydrocarbon structure.

Meanwhile, in order to commercialize a hydrogen storage/release system using LOHC, various technical factors have to be considered in addition to the development of hydrogen storage materials. Among them, for catalysts, hydrogenation/dehydrogenation activity and reversibility, catalyst stability (reusability), and applicability of LOHC suitable for commercial processes should be reviewed.

In this regard, an LOHC-based hydrogen storage and release process using a platinum-supported catalyst known to have good hydrogenation activity may be considered. A platinum-supported catalyst is generally able to easily dissociate hydrogen into hydrogen atoms, and is thus effective for reaction in which hydrogen gas comes into contact with reactants, such as hydrogenolysis or hydrogenation. Also, in the LOHC system, such a catalyst may act as an active site for releasing hydrogen through a ring compound, and may also be effective for dehydrogenation.

However, even if a platinum-supported porous alumina support catalyst is used in hydrogenation/dehydrogenation of LOHC, dehydrogenation (hydrogen release) activity may still be insufficient because the dispersion of the active metal is not high. In addition, a platinum-supported alumina catalyst is typically prepared by impregnation, and as such, multiple steps are required to synthesize an alumina support and support a metal, taking a long time to prepare the catalyst, which is disadvantageous in view of commercialization. In particular, due to intrinsic characteristics of alumina, catalyst stability may be attained to a certain extent, but limitations are imposed on achieving additional improvement in performance.

Moreover, existing hydrogenation/dehydrogenation catalysts show relatively good hydrogen storage/release performance, mainly in LOHC systems having nitrogen-containing heterocycles, but there is a high demand from commercial companies for technology capable of providing good hydrogen storage/release performance even in LOHCs composed only of hydrocarbons such as decalin.

Therefore, catalysts, which not only have better hydrogenation/dehydrogenation activity and reversibility than conventionally known metal-supported catalysts, for example platinum-supported catalysts, but also exhibit good performance for various types of LOHCs, are required.

### [Disclosure]

### [Technical Problem]

An embodiment of the present disclosure is intended to provide a catalyst that is improved in hydrogenation/dehydrogenation efficiency and reversibility for a liquid organic hydrogen carrier, long-term stability, and scalability of the liquid organic hydrogen carrier, and a method for preparing the same.

Another embodiment of the present disclosure is intended to provide a hydrogen storage/release process based on a liquid organic hydrogen carrier using the catalyst described above.

### [Technical Solution]

A first aspect of the present disclosure provides:
a catalyst for hydrogenation/dehydrogenation of a liquid organic hydrogen carrier, comprising:
an alumina support, and
platinum comprising platinum single atoms and clusters as an active metal supported on the alumina-containing support,
in which:
   the amount of platinum in the catalyst is in a range of 0.01 to 10 wt%, on an elemental basis, and
   the amount of platinum clusters in the supported platinum is in a range of 10 to 55%.

A second aspect of the present disclosure provides:
a method for preparing a catalyst for hydrogenation/dehydrogenation of a liquid organic hydrogen carrier, comprising:
   a) forming a gel-type catalytic solid by performing solid-state reaction without use of a solvent while applying external energy to a mixture containing at least one alumina precursor, at least one platinum precursor, and a base, and
   b) supporting platinum comprising platinum single atoms and clusters on an alumina-containing support by heat-treating the catalytic solid under an oxygen-containing atmosphere,
in which:
   the amount of platinum in the catalyst is in a range of 0.01 to 10 wt%, on an elemental basis, and
   the amount of platinum clusters in the supported platinum is in a range of 10 to 55%.

A third aspect of the present disclosure provides a method for storing or releasing hydrogen, comprising:
a hydrogenation step of storing hydrogen in a liquid organic hydrogen carrier in the presence of a catalyst, and
a dehydrogenation step of releasing hydrogen from the hydrogenated liquid organic hydrogen carrier in the presence of a catalyst,
in which the catalyst used in at least one of the hydrogenation step and the dehydrogenation step comprises:
   an alumina support, and
   platinum comprising platinum single atoms and clusters as an active metal supported on the alumina-containing support,
   in which:
      the amount of platinum in the catalyst is in a range of 0.01 to 10 wt%, on an elemental basis, and the amount of platinum clusters in the supported platinum is in a range of 10 to 55%, and
      hydrogen is stored or released by alternately performing the hydrogenation step and the dehydrogenation step.

### [Advantageous Effects]

According to an embodiment of the present disclosure, platinum composed of platinum single atoms and platinum clusters is supported as an active metal on an alumina support in a catalyst, whereby good hydrogenation (hydrogen storage)/dehydrogenation (hydrogen release) activity can be achieved for both nitrogen-containing liquid organic hydrogen carriers and liquid organic hydrogen carriers composed of hydrocarbons. In particular, the advantage of improving hydrogenation/dehydrogenation reversibility is provided. Also, in another embodiment of the present disclosure, single-step reaction can be performed by subjecting a material mixture containing a platinum precursor and an alumina precursor to application of simple physical or mechanical external energy, such as milling, without use of a solvent, and in particular, unique properties of the platinum-supported alumina catalyst described above can be achieved in a manner in which the form of platinum is affected by controlling heat treatment or firing conditions. The catalyst thus prepared can have combined advantages not only of overcoming the technical limitations of a two-step catalyst preparation method (such as impregnation) requiring relatively high catalyst preparation cost and time, but also of maintaining improved activity over a long period of time during hydrogenation/dehydrogenation of liquid organic hydrogen carriers.

### [Description of Drawings]

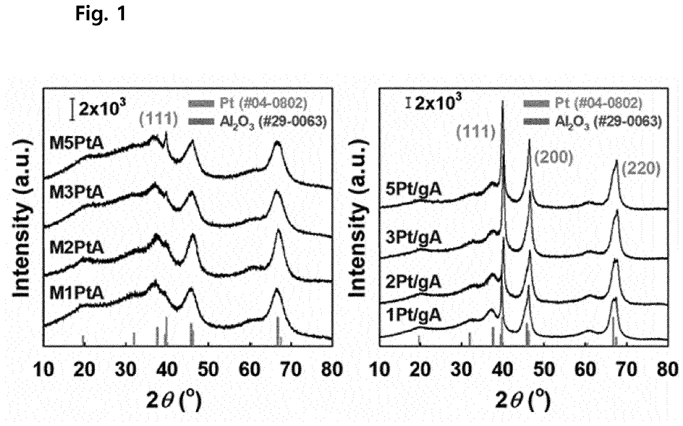

FIG. 1 shows XRD patterns for platinum-supported catalysts (MPtA) according to Examples (solid-state reaction) and platinum-supported catalysts (Pt/gA) according to Comparative Examples (impregnation) with platinum supported in various amounts (1 wt%, 2 wt%, 3 wt%, and 5 wt%);

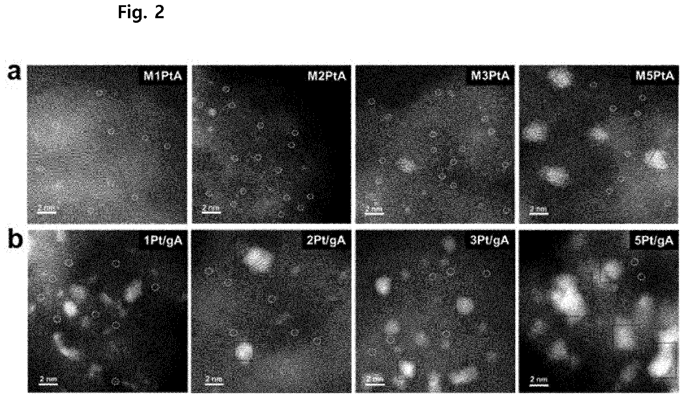

FIGs. 2a and 2b show dark-field HAADF-STEM images of the platinum-supported catalysts (MPtA) according to Examples (solid-state reaction) and the platinum-supported catalysts (Pt/gA) according to Comparative Examples (impregnation) with platinum supported in various amounts (1 wt%, 2 wt %, 3 wt%, and 5 wt%);

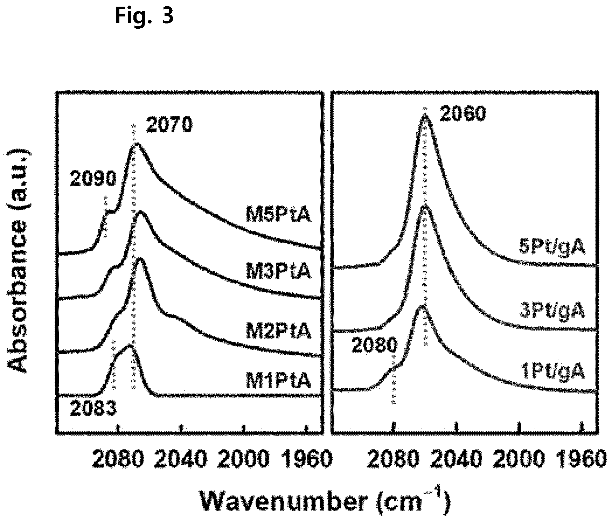

FIG. 3 is graphs showing CO-DRIFT spectra for the platinum-supported catalysts (MPtA) according to Examples (solid-state reaction; Pt loading: 1 wt%, 2 wt%, 3 wt%, and 5 wt%) and the platinum-supported catalysts (Pt/gA) according to Comparative Examples (impregnation; Pt loading: 1 wt%, 3 wt%, and 5 wt%) with platinum supported in various amounts;

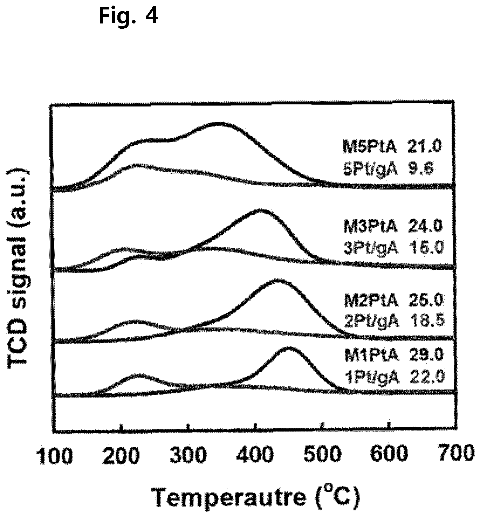

FIG. 4 is a graph showing H₂-TPD results for the platinum-supported catalysts (MPtA) according to Examples (solid-state reaction) and the platinum-supported catalysts (Pt/gA) according to Comparative Examples (impregnation) with platinum supported in various amounts (1 wt%, 2 wt%, 3 wt%, and 5 wt%) (the numerical value in the drawing is the amount of adsorbed hydrogen (unit: mmol g_{Pt}⁻¹));

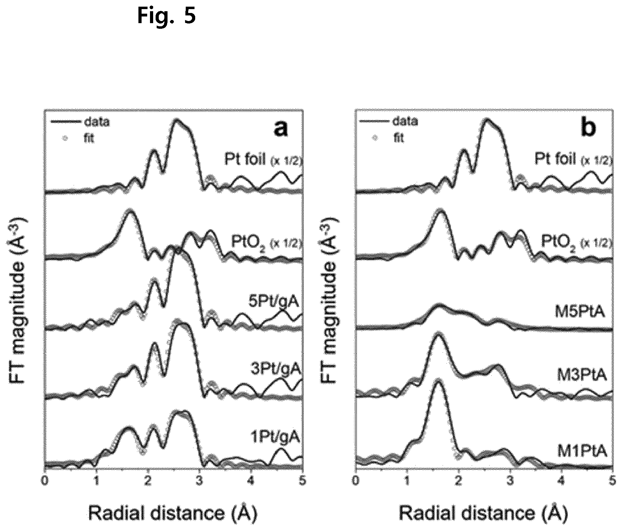

FIGs. 5a and 5b are graphs showing EXAFS fitting results for the platinum-supported catalysts (MPtA) according to Examples (solid-state reaction) and the platinum-supported catalysts (Pt/gA) according to Comparative Examples (impregnation) with platinum supported in various amounts (1 wt%, 3 wt%, and 5 wt%) (reference materials are Pt foil and PtO₂);

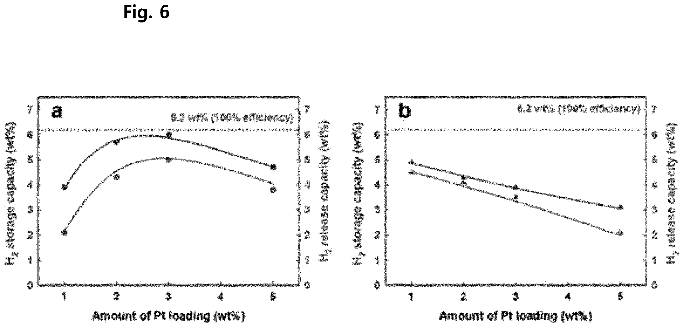

FIGs. 6a and 6b are graphs comparing hydrogenation and dehydrogenation efficiencies using the platinum-supported catalysts (MPtA) according to Examples (solid-state reaction) and the platinum-supported catalysts (Pt/gA) according to Comparative Examples (impregnation) with platinum supported in various amounts (1 wt%, 2 wt%, 3 wt%, and 5 wt%);

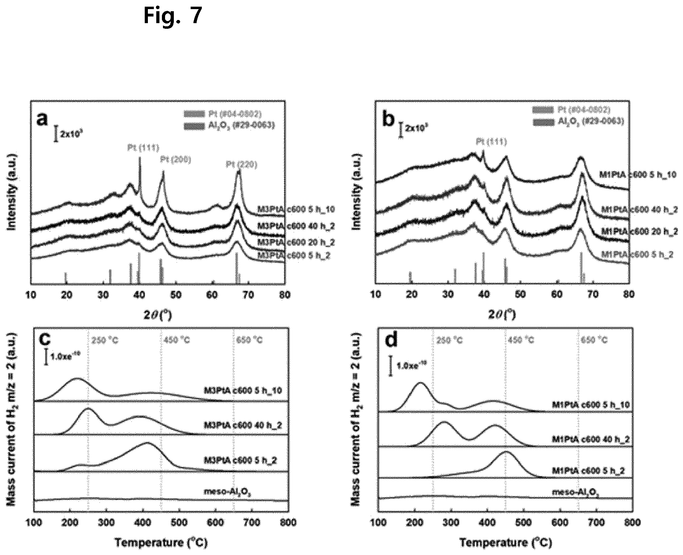

FIG. 7 is graphs showing XRD patterns (a, b) and H₂-TPD results (c, d) for Pt-supported catalysts (loading: 1 wt% and 3 wt%) depending on changes in firing conditions;

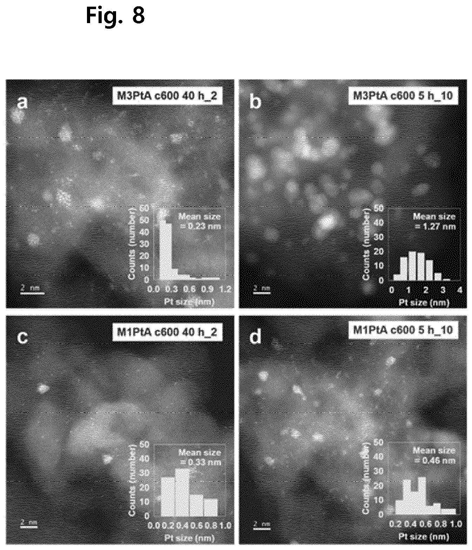

FIG. 8 shows HAADF-STEM images of the Pt-supported catalysts depending on changes in firing conditions (FIGs. 8a and 8b show loading of 3 wt%, and FIGs. 8c and 8d show loading of 1 wt%) ;

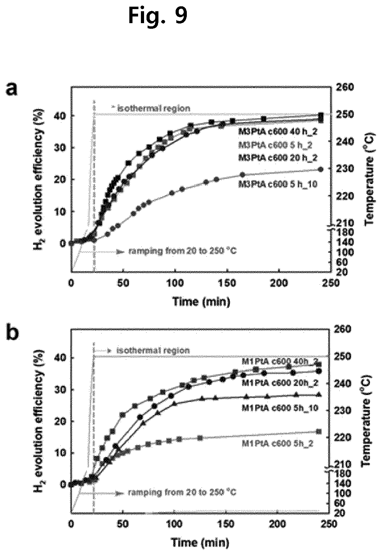

FIG. 9 shows hydrogen release curves over time of dehydrogenation for the Pt-supported catalysts depending on changes in firing conditions (FIG. 9a shows loading of 3 wt%, and FIG. 9b shows loading of 1 wt%) (reaction conditions: 250°C, 1 bar, 4 h, and noble metal (mol)/reactant (mol) of 0.1%);

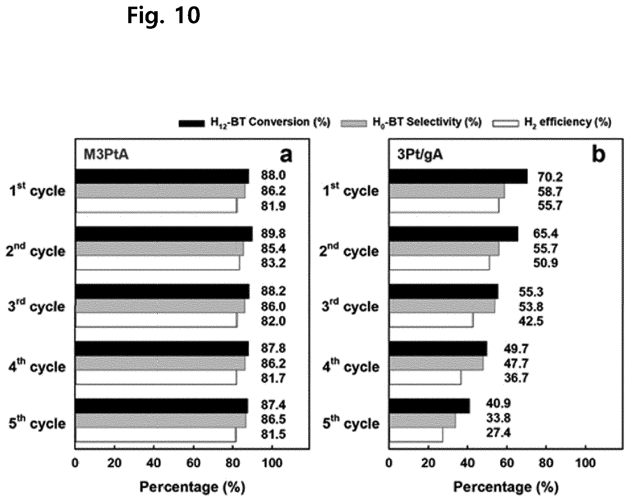

FIG. 10 is graphs showing dehydrogenation results for evaluating long-term stability of the platinum-supported catalyst (M3PtA) according to Example (solid-state reaction) and the platinum-supported catalyst (3Pt/gA) according to Comparative Example (impregnation) (reaction conditions: 250°C, 1 bar, 4 h, and noble metal (mol)/reactant (mol) of 0.1%);

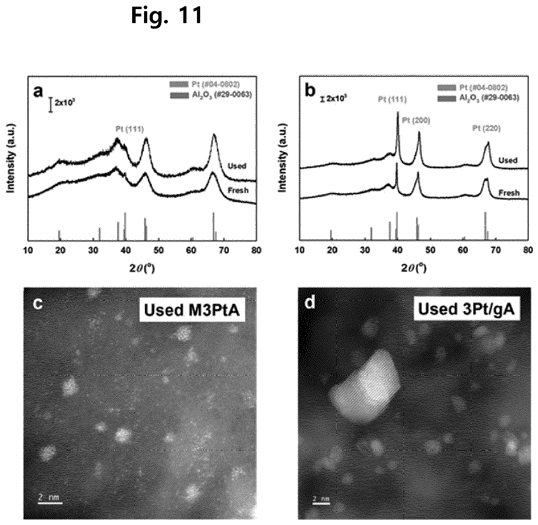

FIG. 11 shows XRD patterns (a, b) before and after reaction of the platinum-supported catalyst (M3PtA) according to Example (solid-state reaction) and the platinum-supported catalyst (3Pt/gA) according to Comparative Example (impregnation) and HAADF-STEM images (c, d) of the catalysts after use; and

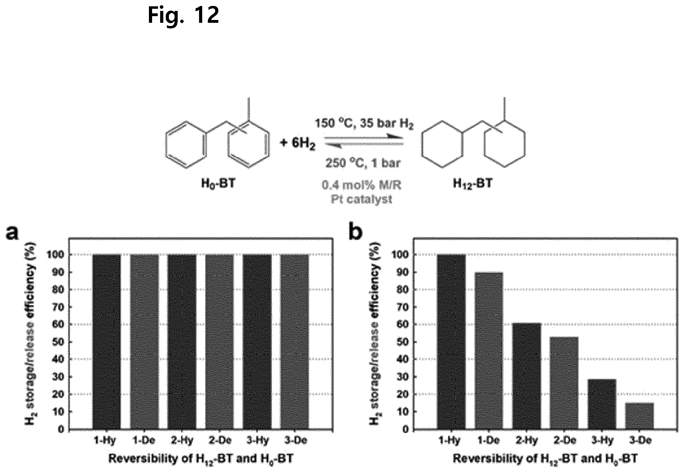

FIGs. 12a and 12b are graphs showing results of comparing hydrogen storage and release efficiencies of H₀-BT using the platinum-supported catalyst (M3PtA) according to Example (solid-state reaction) and the platinum-supported catalyst (3Pt/gA) according to Comparative Example (impregnation) (hydrogenation conditions: 150°C, 35 bar H₂, and 2 h; dehydrogenation conditions: 250°C and 4 h).

### [Best Mode]

The present disclosure can be realized in its entirety based on the following description. It should be understood that the following description is given of preferred embodiments of the present disclosure, and the present disclosure is not necessarily limited thereto. In addition, the accompanying drawings are provided to aid understanding of the present disclosure, and the present disclosure is not limited thereto.

Terms used herein may be defined as follows.

The term "heterogeneous catalyst" may refer to a catalyst that exists in a phase different from that of a reactant during catalytic reaction, for example, a catalyst that is not dissolved in a reaction medium. For a heterogeneous catalyst, in order for the reaction to occur, at least one reactant has to be diffused and adsorbed to the surface of the heterogeneous catalyst, and after reaction, the product needs to be desorbed from the surface of the heterogeneous catalyst.

The term "support" may refer to a material (typically a solid material) having a high specific surface area to which the catalytically active component is attached or deposited.

The term "active metal in a form of single atoms" may be understood as meaning that the active metal attached or fixed to a support exists in an isolated or individualized state in atomic form.

The term "active metal in a form of clusters" may be understood as meaning that the active metal having a size of, for example, about 5 nm or less, for example about 3 nm or less, for example about 2 nm or less (i.e., a group (assembly) of at least two active metal atoms bonded to each other) is attached or fixed to a support.

The term "hydrogenation" may refer to reaction in which hydrogen content in a compound is increased by chemically adding hydrogen to at least a portion of the compound by bringing the compound into contact with a catalyst under supply of hydrogen.

The term "dehydrogenation" may refer to reaction in which hydrogen in a compound is removed and further the removed hydrogen is released from the compound.

The term "impregnation" may refer to a method of preparing a catalyst by impregnating a separately synthesized support with a solution in which a catalyst precursor is dissolved and then performing drying and/or firing (or reduction) treatment as necessary.

The term "salt" may broadly refer to a compound in which a metal cation is coupled with an inorganic anion or organic anion species.

### Overall disclosure

An embodiment of the present disclosure may solve technical limitations when a platinum-supported alumina catalyst, conventionally known as a catalyst for hydrogenation/dehydrogenation, is applied to a hydrogen storage and release (i.e., hydrogenation and dehydrogenation) process using a liquid organic hydrogen carrier, such as difficulty in ensuring good hydrogenation/dehydrogenation reversibility, difficulty in repeated operation of a hydrogen storage and release system due to lowered long-term stability of the catalyst, and applicability to hydrogen storage and release using a limited type of liquid organic hydrogen carrier.

In general, the size of a metal (for example, nanometer-sized metal particles) as an active metal in a catalyst is a factor that significantly affects reaction activity. Specifically, when the same amount of active metal is supported on a support having the same surface area, the number of metal active sites supported on the same support increases with minimization of the metal size. Therefore, catalytic activity per metal atom may be promoted by increasing the dispersion of active metal and increasing the proportion of coordinated surface atoms.

In this regard, a single atom catalyst (SAC) attached in atomic units (in a form of single atoms) to the support is effective at increasing the number of active sites of the catalyst, but tends to cause aggregation at high temperatures due to high surface energy thereof, increasing the particle size. On the other hand, a catalyst supported in a form of clusters is configured such that metal atoms and ligands bind to each other, and has a structure similar to other metal oxides, so it is excellent in view of catalyst stability. The platinum-supported catalyst according to the present embodiment is capable of improving activity by dispersing the metal evenly over a large surface area compared to the synthesized catalyst by conventional impregnation, and moreover, platinum single atoms and clusters are supported in combination (mixed form), thus implementing the advantages of single atoms and clusters at once, thereby manifesting effects that exceed those expected from single atoms and clusters alone. In particular, in cases of catalyst preparation by impregnation, metal is supported in a form of particles larger than clusters, which corresponds to a factor that clearly differentiates the catalyst according to the present embodiment from the conventional platinum-supported catalyst.

In the platinum-supported catalyst according to the present embodiment, platinum may be supported in mixed form of platinum single atoms and clusters by a particular catalyst synthesis method, exhibiting excellent catalytic activity and good reversibility for both gas- or liquid-phase hydrogenation and dehydrogenation even in a single reactor, and furthermore, manifesting improved properties in view of long-term stability of the catalyst. What is particularly noteworthy is that, when the proportion of platinum clusters (or single atoms) in the supported active metal (platinum) is appropriately adjusted within a predetermined range, in hydrogen storage/release reaction using a liquid organic hydrogen carrier, hydrogen release efficiency of a platinum-based catalyst, which is difficult to improve compared to hydrogen storage efficiency, may be effectively increased.

### Hydrogenation/dehydrogenation catalyst

An embodiment of the present disclosure provides a catalyst (i.e., a heterogeneous catalyst) suitable for storage/release of hydrogen through hydrogenation/dehydrogenation for wide range of liquid organic hydrogen carriers, including liquid organic hydrogen carriers having nitrogen-containing heterocycles as well as liquid organic hydrogen carriers composed exclusively of hydrocarbons.

In this regard, hydrogenation/dehydrogenation catalysts are broadly catalysts with platinum as an active metal supported on a porous alumina-containing support. Here, platinum with platinum single atoms and clusters mixed may be dispersed and supported on the support. Further, the supported platinum may be in a form of crystallites. As such, platinum crystallites may mainly contain (111) planes. Additionally, platinum in the catalyst may be in an oxidized state and/or a reduced state (or an elemental state or a partially reduced state), for example in a reduced state. In this case, the reduced state may be implemented by reducing the catalyst in an oxidized state (fired state) .

In an embodiment, the amount (loading) of platinum in the catalyst may fall in the range of, on an elemental basis, about 0.01 to 10 wt%, for example about 0.1 to 5 wt%, for example about 0.5 to 3 wt%.

According to an embodiment, platinum in the catalyst may be configured to contain both single atoms and clusters with a size of about 5 nm or less, for example about 3 nm or less, for example about 0.1 to 2 nm. When the size of platinum exceeds a certain level, reaction efficiency may decrease due to lowered dispersion of the metal supported on the support, so the size thereof may be advantageously adjusted within the above-mentioned range but may be changed somewhat in the above numerical range depending on reaction conditions, etc.

Meanwhile, in the present embodiment, the support for the hydrogenation/dehydrogenation catalyst may be an alumina-containing support. This alumina may be mesoporous alumina and may typically exhibit ink-bottle or channel-type pore connectivity, resulting in a relatively high surface area, high packing density, thermal stability, physical strength, and regenerative power for hydrogenation/dehydrogenation.

According to an embodiment, the BET specific surface area of the support in the catalyst may fall in the range of, for example, at least about 300 m²/g, for example about 320 to 400 m²/g, for example about 350 to 380 m²/g. Such specific surface area is much higher than that of a gamma-alumina support conventionally used in various chemical reactions, and is suitable for effectively dispersing platinum as an active metal.

According to an embodiment, the pore volume of the support in the catalyst may fall in the range of, for example, about 0.4 to 0.55 cm³/g, for example about 0.42 to 0.5 cm³/g, for example about 0.45 to 0.49 cm³/g. Also, the pore size of the support in the catalyst may fall in the range of, for example, about 3 to 4.5 nm, for example about 3.5 to 4.3 nm, for example about 3.8 to 4.1 nm.

According to an embodiment, although the shape of the catalyst is not particularly limited, in consideration of stability and efficiency of the catalyst, for example ball shape, tablet shape, granule shape, or pellet shape may be applied. As such, the size (or diameter) of the catalyst may be controlled in the range of, for example, about 0.1 to 10 mm, for example about 0.5 to 5 mm, for example about 1 to 3 mm, which may be understood as being for illustrative purposes.

The platinum-supported alumina catalyst according to the present embodiment may increase the hydrogenation/dehydrogenation activity for wide ranges of liquid organic hydrogen carriers, and especially may improve hydrogenation/dehydrogenation reversibility. Furthermore, good catalytic activity may be maintained even under continuous repeated operation of hydrogenation/dehydrogenation due to improved interaction between metal ingredients constituting the catalyst (i.e., good long-term stability), which is distinguished from the conventional platinum-supported catalysts (typically prepared by impregnation).

### Preparation of catalyst

Another embodiment of the present disclosure provides a method for preparing a catalyst for hydrogenation/dehydrogenation of a liquid organic hydrogen carrier, in which platinum with platinum single atoms and clusters mixed, as an active metal, is supported on an alumina support.

In this regard, when preparing a platinum/alumina supported catalyst by impregnation commonly applied in the conventional techniques, platinum is present in a form of particles on the alumina support, and in order to exhibit predetermined activity, platinum has to be supported in a relatively high amount. However, the method for preparing the catalyst according to the present embodiment is performed in a simple manner in which a platinum precursor and an alumina precursor are allowed to react in a single step without using a solvent necessary to prepare a metal precursor solution in the impregnation technique (involving preparing a liquid metal precursor solution and then bringing the same into contact with a porous inorganic oxide support (for example, alumina) to immobilize or attach the metal precursor to the pores of the support), followed by heat treatment (for example, heat treatment under an oxygen-containing atmosphere). This method enables platinum with platinum single atoms and clusters mixed to be selectively and uniformly dispersed on an alumina-containing support, thereby improving hydrogenation/dehydrogenation activity and reversibility. Moreover, it is possible to prepare a catalyst having excellent hydrogenation/dehydrogenation activity during liquid- or gas-phase reaction not only for liquid organic hydrogen carriers having nitrogen-containing heterocycles but also for liquid organic hydrogen carriers composed exclusively of hydrocarbons.

Furthermore, in order to improve the long-term stability of the catalyst, strong interaction is required between the active metal and the support, and it is desirable to disperse and support the active metal as evenly as possible on the support. As a metal oxide-based support, an alumina support is known to be effective in terms of catalytic stability because it is strongly bound to the precursor of active metal. However, in cases of gamma-alumina, which is widely used as an alumina support for impregnation, it is difficult to provide properties (for example, specific surface area) suitable for uniformly dispersing the active metal in fine sizes such as single atoms and clusters. In addition, even when platinum is supported by impregnation using alumina with a relatively high specific surface area, as a support, there is a limit to drastically increasing the specific surface area of the final catalyst due to the nature of the preparation method, and it is still difficult to decrease the size of platinum to the single atom level.

According to an embodiment, a precursor mixture containing at least one alumina precursor, at least one platinum precursor, and base is prepared first.

For example, the precursor mixture may be obtained by mixing three components simultaneously. Alternatively, the precursor mixture may be prepared by mixing two of the three components and then adding the remaining component thereto. For example, the alumina precursor and the base may be mixed first, and then the platinum precursor may be added and mixed.

According to an embodiment, the platinum precursor may be an organic or inorganic acid salt of platinum, a complex thereof, or a combination thereof. An example of the platinum precursor may include at least one selected from among PtF₆, PtF₄, [PtF₅]₄, PtCl₃, PtCl₄, Pt₆Cl₁₂, PtBr₃, PtBr₄, PtI₂, PtI₃, PtI₄, PtO, PtO₂, PtO, PtS, PtS₂, Pt(CO)₄, [PtCl₂(NH₃)₂], [PtCl₂(NH₃)₂], K₂[PtCl₆], K₂[Pt(CN)₄], PtCl₄·5H₂O, K[PtCl₃(NH₃)], Na₂[PtBr₆]·6H₂O, (NH₄)₂[PtBr₆], K₂[PtI₆], (NH₄)₂[PtCl₆], K₂[Pt(CN)₆], (NH₄)₂[PtCl₄], K₂[Pt(NO₂)₄], K[PtCl₃(C₂H₄)]·H₂O, [Pt(NH₃)₄](NO₃)₂, and H₂PtCl₆, but is not necessarily limited thereto. In a certain embodiment, [Pt(NH₃)₄](NO₃)₂ may be used as the platinum precursor.

Also, the alumina precursor may be an organic or inorganic acid salt of aluminum, an alkoxide thereof, a complex thereof, or a combination thereof, and a representative example thereof may include at least one selected from the group consisting of aluminum acetate, aluminum acetylacetonate, aluminum bromide, aluminum t-butoxide, aluminum sec-butoxide, aluminum pentoxide, aluminum ethoxide, aluminum isopropoxide, aluminum tributoxide, aluminum chloride, aluminum bromide, aluminum iodide, aluminum sulfate, aluminum nitrate, and hydrates thereof. In a certain embodiment, aluminum nitrate and/or hydrates thereof may be used.

According to an embodiment, the base may include at least one selected from the group consisting of ammonium carbonate, ammonium bicarbonate, ammonium chloride, ammonium oxalate, ammonium sulfate, ammonium hydroxide, ammonium nitrate, lithium hydroxide, sodium hydroxide, potassium hydroxide, calcium hydroxide, and magnesium hydroxide, and for example, ammonium bicarbonate may be used. The reason for using base in this way is that, when forming a metal oxide from an acidic metal precursor, neutralization occurs in which a metal salt and water are formed due to precipitation by addition of base.

According to an embodiment, the molar ratio of platinum precursor/base in the precursor mixture may fall in the range of, for example, about 0.0001 to 0.1, for example about 0.002 to 0.05, for example about 0.008 to 0.02. When the amount of the base used is too small or large, the time required to form a gel, which is the final step of synthesis, becomes shorter or longer, and as a result, it is difficult to form a metal oxide in a desired crystallite phase, and furthermore, catalyst properties such as specific surface area, dispersion of metal, particle size, etc. may be affected, so the molar ratio may be advantageously appropriately adjusted within the above-mentioned range. However, the above range may vary depending on the types of precursor and base. Additionally, the mixing ratio of the platinum precursor to the alumina precursor in the precursor mixture may be determined depending on respective amounts of the alumina support and platinum in the catalyst described above.

According to an embodiment, reaction may be carried out by applying external energy during preparation of the precursor mixture described above or after formation of the physical mixture thereof, and only reaction between solid precursors may be carried out without using a solvent, unlike impregnation. In this way, by inducing stronger interaction between metal precursors (platinum precursor and precursor of inorganic oxide (alumina)) through solid-state reaction, when firing or heat treatment conditions are adjusted after solid-state reaction as described later, aggregation (or agglomeration) of platinum may be dramatically decreased, and in particular, platinum may be supported in mixed form of platinum single atoms and clusters on the alumina support.

According to an embodiment, the external energy applied to perform solid-state reaction between the three components described above may typically be physical or mechanical energy, for example frictional energy by milling, grinding, or pulverizing, for example frictional energy by ball milling, which is described for illustrative purposes, and any external energy may be used without particular limitation so long as it may induce reaction between the platinum precursor and the alumina precursor under solvent-free conditions.

According to an embodiment, solid-state reaction under application of external energy may be performed, for example, for about 5 to 40 minutes, for example for about 10 to 30 minutes, for example for about 13 to 25 minutes, which may be understood as being for illustrative purposes, and the reaction time may vary depending on the reaction scale, etc.

As such, when solid-state reaction between the precursors progresses, a gel-type catalyst solid may be formed. Specifically, during the solid-state reaction process or the mixing process under application of external energy (e.g., frictional energy), the base may be partially or completely decomposed, and when the metal precursor is in the form of a metal salt, an anion or anion species bound to a metal cation may be substituted with a hydroxide group. In this process, gases originating from the precursor and the base may be released. For example, when ammonium bicarbonate is used as a base, a large amount of carbon dioxide may be mainly generated. As the reaction progresses under gas release, a gel may be formed from the precursors, and then hardened by solidification, after which a gel may be formed again, resulting in a gel-type catalytic solid.

Next, converting the gel-type catalytic solid into an oxide by subjecting the catalytic solid formed by solid-state reaction to heat treatment, namely firing (or calcination) under an oxygen-containing atmosphere (for example, an air atmosphere) may be performed. Through this heat treatment step, platinum may be evenly dispersed in the pores of the alumina support. As such, it is worth noting that the crystallinity of platinum may be affected by controlling the heat treatment conditions, whereby platinum single atoms and clusters may be supported at an appropriate ratio on the alumina support. For example, when the heat treatment time is decreased or the heating rate is lowered, the proportion of platinum single atoms tends to increase.

As mentioned above, however, upon supporting of platinum single atoms alone, the activity resulting from the single atom catalyst may be improved, but platinum may aggregate under heating conditions involved in hydrogenation/dehydrogenation of the liquid organic hydrogen carrier, which is undesirable in view of long-term stability. Therefore, in the present embodiment, platinum may be supported in mixed form of platinum single atoms and clusters by controlling the heat treatment time and/or the heating rate in the catalyst preparation process by solid-state reaction, thereby maintaining good catalytic activity and hydrogenation/dehydrogenation reversibility and simultaneously attaining long-term stability even after repeated operation of hydrogen storage/release. These are unexpected advantages over the conventional catalysts.

According to an embodiment, the amount of platinum clusters in the supported platinum in the catalyst may be determined through observation using, for example, HAADF-STEM (for example, dark-field HAADF-STEM). In this regard, the relative proportion (amount) of platinum clusters may be calculated by measuring respective numbers of single atoms and clusters in the supported platinum in the catalyst (although the supported platinum mostly exists as single atoms and clusters, it may further contain nanoparticles (having a size of, for example, about 2 to 8 nm, for example about 2.5 to 6 nm, for example about 3 to 5 nm) larger than clusters, and as such, respective numbers of single atoms, clusters, and nanoparticles). Here, the amount of nanoparticles larger than clusters in platinum may be, for example, about 20% or less, for example about 10% or less, for example about 5% or less.

According to an embodiment, the amount of clusters in platinum supported on the alumina support may be adjusted in the range of, for example, about 10 to 55%, for example about 12 to 50%, for example about 15 to 40%. According to a certain embodiment, the amount of clusters in platinum, which is an active metal, may be adjusted in the range of about 20 to 35%, for example about 22 to 30%. In this regard, when the amount of clusters in platinum falls out of a certain range (i.e., when the amount of single atoms is too high or low), the dehydrogenation activity may decrease, making it difficult to improve hydrogenation/dehydrogenation reversibility. It may be advantageous to set the heat treatment conditions such that the amount of platinum clusters is controlled within the above-mentioned range.

According to an embodiment, heat treatment may be performed under temperature conditions of, for example, about 300 to 800°C, for example about 400 to 750°C, for example about 500 to 700°C. As such, it may be advantageous to appropriately adjust the heating rate in the range of, for example, about 1 to 15 °C/min (for example about 1.5 to 12 °C/min, for example about 2 to 10 °C/min), and the heat treatment time in the range of, for example, about 3 to 60 hours (for example about 5 to 50 hours, for example about 10 to 40 hours), taking into consideration the desired ratio of single atoms and clusters.

After heat treatment under an oxygen-containing atmosphere, reduction treatment may be additionally performed to activate the catalyst for hydrogenation/dehydrogenation, which is the final use. According to an embodiment, hydrogen, carbon monoxide, methane, or a combination thereof may be used as a gas for reduction treatment, and more typically, reduction treatment may be performed under a hydrogen atmosphere.

In an embodiment, the reduction treatment temperature may fall in the range of, for example, about 300 to 600°C (for example about 350 to 550°C, for example about 400 to 500°C). As such, the heating rate may fall in the range of, for example, about 1 to 10 °C/min, for example about 4 to 6 °C/min. Also, the reduction treatment time may be set in the range of, for example, about 1 to 10 hours, for example about 2 to 5 hours. In addition, the pressure (partial pressure of the reducing gas) during reduction treatment is not particularly limited, but may fall in the range of, for example, about 1 to 5 bar, for example about 1.5 to 4 bar, for example about 2 to 3 bar. The reduction treatment conditions described above may be understood as being for illustrative purposes and are not necessarily limited thereto. Through the reduction treatment, a catalyst may be prepared in which platinum as an active metal is supported in, for example, a fully reduced (i.e., elemental) state or a partially reduced (or oxidized) state, for example a fully reduced state, on an alumina support.

### Hydrogenation/dehydrogenation using liquid organic hydrogen carrier compound (hydrogen storage and release)

According to an embodiment of the present disclosure, a liquid organic hydrogen carrier (LOHC) may be used as a hydrogen storage material, and such a liquid organic hydrogen carrier system is composed of hydrogen-lean and hydrogen-rich organic compounds, and hydrogen may be stored and released through repeated liquid- or gas-phase catalytic hydrogenation and dehydrogenation cycles. In particular, by handling hydrogen in a form of a liquid organic hydrogen carrier, existing fuel facilities may be utilized, and unlike hydrogen storage by hydrogenation of gases (e.g., carbon dioxide or nitrogen), when releasing hydrogen from a liquid organic hydrogen carrier, pure hydrogen may be produced after condensation of the carrier compound having a relatively high boiling point.

According to the present embodiment, reversible hydrogenation/dehydrogenation of a liquid organic hydrogen carrier (LOHC) may be performed using a catalyst in which platinum with platinum single atoms and clusters mixed is supported on an alumina support.

According to an embodiment, the platinum-supported catalyst described above may be effectively applied to wide ranges of liquid organic hydrogen carriers, including liquid organic hydrogen carriers having nitrogen-containing heterocycles and liquid organic hydrogen carriers composed of hydrocarbons (for example, liquid organic hydrogen carriers composed of aromatic hydrocarbons such as dibenzyltoluene) . These compounds typically may have at least one conjugated bond within the molecular structure thereof.

According to an embodiment, the liquid organic hydrogen carrier may be at least one (hydrogen-lean form) selected from among compounds represented by General Formulas 1 to 9 below.

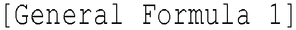

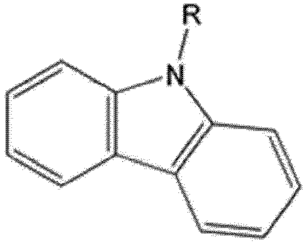

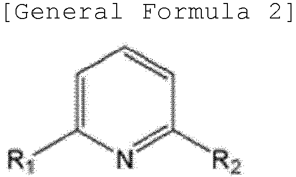

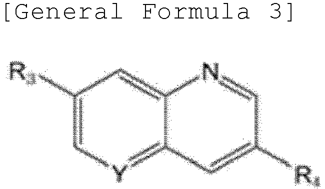

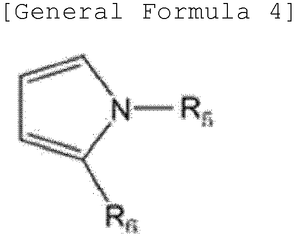

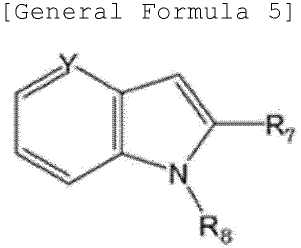

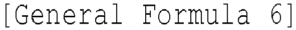

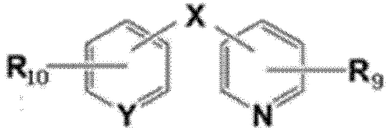

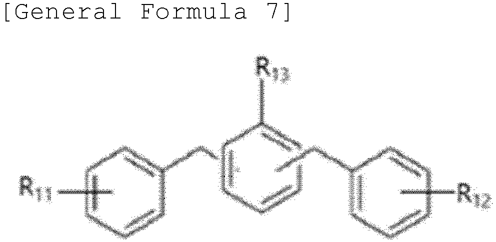

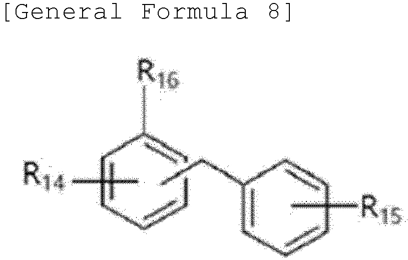

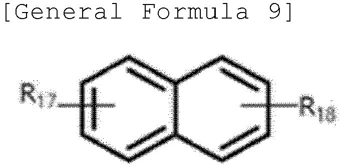

In the above formulas, R, R₁, R₂, R₃, R₄, R₅, R₆, R₇, R₈, R₉, R₁₀, R₁₁, R₁₂, R₁₃, R₁₄, R₁₅, R₁₆, R₁₇, and R₁₈ are each hydrogen or a C₁-C₆ alkyl group, X is -(CHR₁₉)ₙ- (in which n is an integer from 1 to 3, and R₁₉ is H, OH, or a C₁-C₆ alkyl group), and Y is CH or N.

The liquid organic hydrogen carrier compound exemplified above may exhibit a melting point in the range of, for example, about 100°C or less, for example about 0 to 80°C, for example about 10 to 60°C, and may maintain a liquid phase at room temperature. Also, the boiling point thereof may fall in the range of about 380°C or less, for example about 130 to 350°C, for example about 180 to 300°C. Due to these melting point and boiling point characteristics, the hydrogen storage and release system using a liquid organic hydrogen carrier has the advantage of omitting the use of separate solvents and/or additives to improve reactivity.

As described above, a catalyst in which platinum with platinum single atoms and clusters mixed is supported as an active metal on an alumina support is suitable for storing and releasing hydrogen by repeating the hydrogenation/dehydrogenation cycles of the liquid organic hydrogen carrier.

A method for storing and releasing hydrogen according to an embodiment may comprise bringing an organic compound that is a liquid organic hydrogen carrier (for example in liquid form) into contact with the platinum-supported alumina catalyst in a reaction system. In an embodiment, the ratio of active metal (Pt) in the catalyst/LOHC (M/R) may be determined in the range of, for example, about 0.05 to 0.4 mol%, for example about 0.07 to 0.35 mol%, for example about 0.1 to 0.3 mol%. As such, the ratio of M/R may be distinguished between hydrogenation and dehydrogenation. For example, the ratio of M/R may be set relatively high in hydrogenation, while the ratio of M/R may be set relatively low in dehydrogenation. In this regard, if the ratio of M/R is too low, there is a limit to lowering the activation energy of the reaction, which may result in insufficient reaction activity. On the other hand, if the ratio of M/R is too high, the volume of the solid catalyst may increase significantly compared to the liquid reactant, forming an excessive slurry state, which not only makes it difficult to perform stirring during the reaction process, but also creates a diffusion limitation in the catalyst, resulting in a phenomenon in which the active sites of the catalyst cannot be sufficiently utilized. Therefore, it may be advantageous to appropriately adjust the ratio of M/R within the above-mentioned range. However, this ratio may vary depending on the type of hydrogen storage compound used.

In an embodiment, the ratio of M/R in hydrogenation (hydrogen storage) may be adjusted in the range of, for example, about 0.1 to 0.4 mol% (for example about 0.15 to 0.35 mol%, for example about 0.2 to 0.3 mol%), while the ratio of M/R in dehydrogenation (hydrogen release) may be adjusted in the range of, for example, about 0.05 to 0.15 mol% (for example about 0.07 to 0.13 mol%, for example about 0.09 to 0.12 mol%).

In this regard, hydrogenation may be performed to store hydrogen in a hydrogen storage material (a liquid organic hydrogen carrier), and the hydrogenation temperature may fall in the range of, for example, about 50 to 250°C, for example about 80 to 220°C, for example about 100 to 190°C. Also, the hydrogenation pressure may fall in the range of, for example, about 5 to 100 bar, for example about 20 to 80 bar, for example about 25 to 70 bar, for example about 30 to 50 bar. Also, the hydrogenation time is not particularly limited, but may fall in the range of, for example, about 0.5 to 24 hours, for example about 1 to 12 hours, for example 1.5 to 6 hours.

According to an embodiment, hydrogenation efficiency (defined as the number of moles of hydrogen stored by actual hydrogenation relative to the number of moles of hydrogen that may theoretically be stored in 1 mole of the dehydrogenation reactant) using the platinum/alumina supported catalyst described above may be, for example, at least about 62%, for example at least about 90%, for example at least about 96%. As such, selectivity for the hydrogenation product corresponding to the hydrogen storage compound may be, for example, at least about 58%, for example at least about 90%, for example at least about 99%.

On the other hand, dehydrogenation may be performed to release hydrogen from the hydrogen storage material (liquid organic hydrogen carrier). Dehydrogenation, which is endothermic, may be performed at a temperature higher (by, for example, about 50 to 150°C, for example about 60 to 120°C, for example about 80 to 100°C) than hydrogenation (exothermic) of the same hydrogen storage material. According to an embodiment, the dehydrogenation temperature may fall in the range of, for example, about 100 to 350°C, for example about 150 to 320°C, for example about 180 to 290°C. Also, unlike the reaction temperature, the dehydrogenation pressure may be, for example, about 1 to 10 bar, for example about 1 to 5 bar, for example ambient pressure conditions, which is low compared to the pressure conditions of hydrogenation. Also, the dehydrogenation time is not particularly limited, but may be set in the range of, for example, about 0.5 to 24 hours, for example about 2 to 12 hours, for example about 3 to 8 hours.

According to an embodiment, dehydrogenation efficiency (defined as the number of moles of hydrogen produced by actual dehydrogenation relative to the number of moles of hydrogen that may theoretically be released from 1 mole of the hydrogenation reactant) using the catalyst described above may be, for example, at least about 50%, for example at least about 60%, for example at least about 86%.

Meanwhile, according to an embodiment, hydrogenation/dehydrogenation may be performed using reactors known in the art, such as batch reactors, continuous reactors, semi-continuous reactors, etc., and for liquid organic hydrogen carriers, for example liquid organic hydrogen carriers having relatively high boiling points, the reactor may be provided with a stirrer because hydrogenation and dehydrogenation may occur in a liquid phase. According to an embodiment, the reaction may be performed in a fixed-bed reactor using a catalyst in a form of particles.

### [Mode for Invention]

The present disclosure may be more clearly understood by the following examples, which are merely set forth to illustrate the present disclosure and are not to be construed as limiting the scope of the present disclosure.

### Examples

The prepared catalysts of Examples and Comparative Examples were analyzed according to the following analysis methods.

### - Transmission electron microscopy (TEM, HAADF-STEM)

A sample dispersed in methanol was dropped onto a Cu grid specimen using a transmission electron microscope (TEM, HAADF-STEM, JEOL, TEM2100F), then dried in a vacuum oven at 60°C for 20 hours or more, and the size of the metal particles supported on the support was measured.

### - Analysis of crystallite state of Pt metal (CO-DRIFT)

CO-DRIFT (chemisorbed diffuse reflectance infrared Fourier transform) spectrum analysis was performed using a Nicolet 6700 FT-IR (equipped with a Harrick Praying Mantis high temperature reaction chamber). Before measurement, 30 mg of the sample was reduced at 500°C for 1 hour under a 5% H₂/Ar (100 cm³ min⁻¹) atmosphere. After reduction, the temperature was lowered to 50°C, followed by exchange with Ar gas to remove physically adsorbed materials from the sample surface. IR analysis was performed by exposing the sample to 5% CO/Ar (50 cm³ min⁻¹) for 30 minutes and then desorbing the adsorbed CO through evacuation for 30 minutes.

### Examples

### Preparation of platinum/alumina catalyst by solid-state reaction

First, 21.84 g of an Al precursor (Al(NO₃)₃·9H₂O), 13.88 g of ammonium bicarbonate (NH₄HCO₃), and 0.182 g of a Pt metal precursor ([Pt(NH₃)₄](NO₃)₂) were placed at once in a mortar without a solvent and physically mixed. Thereafter, frictional heat was applied by continuously stirring the physical mixture with a pestle for 20 minutes. As such, the solid precursors were mixed a total of three times, generating a large amount of CO₂ and forming a gel. 10 minutes after mixing, the gel was solidified again and hardened, and after 6 minutes, a gel was formed again and softened.

Next, the gel solid mixed for 20 minutes was placed in a crucible and fired for 5 hours under heat treatment temperature conditions of 600°C (heating rate: 2°C/min). After firing, reduction treatment using hydrogen was performed (500°C, 5 °C/min, and 3 hours), and reaction activity was compared in the presence of the reduced catalyst (the platinum/alumina catalyst thus prepared was represented as M3PtA x_y (x; firing temperature, y; firing time) (platinum loading: 3 wt%)). Also, platinum/alumina catalysts with various platinum loadings (1 wt%, 2 wt%, and 5 wt%) were prepared according to the same procedure and activity thereof was evaluated.

### Comparative Examples

### Preparation of platinum/alumina catalyst by impregnation

A 3 wt% Pt metal precursor solution (obtained by uniformly mixing 0.182 g of [Pt(NH₃)₄](NO₃)₃ and 2 ml of distilled water) was physically supported on 3 g of commercially available γ-Al₂O₃ (gA) by impregnation, dried in an oven at 100°C, placed in a crucible, and then fired for 5 hours (600°C and 2°C/min). Thereafter, hydrogen reduction treatment (500°C, 3 hours, and heating rate of 5 °C/min) was performed, and finally, a 3Pt/gA x_y (x; firing temperature, y; firing time) catalyst was obtained (platinum loading: 3 wt%). Additionally, platinum/alumina catalysts with various platinum loadings (1 wt%, 2 wt%, and 5 wt%) were prepared according to the same procedure and activity thereof was evaluated.

### A. Analysis of properties and reaction activity of catalyst depending on synthesis method

### Analysis of catalyst properties

XRD patterns for the platinum-supported catalysts (MPtA) according to Examples (solid-state reaction) and the platinum-supported catalysts (Pt/gA) according to Comparative Examples (impregnation) with platinum supported in various amounts (1 wt%, 2 wt%, 3 wt%, and 5 wt%) are shown in FIG. 1.

As shown in the drawings, even when platinum was used in the same amount, the size of platinum crystallites varied depending on the synthesis method. For the catalysts prepared by impregnation (Comparative Examples), the crystallite sizes of Pt (111), (200), and (220) were large even at low platinum loading of 1 wt%. In contrast, for the catalysts prepared by solid-state reaction (Examples), only Pt (111) crystallites were formed even when 5 wt% of platinum was supported, indicating that platinum was more uniformly dispersed in the catalysts according to Examples compared to Comparative Examples.

In addition, dark-field HAADF-STEM images of the platinum-supported catalysts (MPtA) according to Examples (solid-state reaction) and the platinum-supported catalysts (Pt/gA) according to Comparative Examples (impregnation) with platinum supported in various amounts (1 wt%, 2 wt%, 3 wt%, and 5 wt%) are shown in FIGs. 2a and 2b.

As can be seen from the drawings, in the catalysts according to Examples, platinum single atoms and clusters were relatively unevenly distributed, whereas in the catalysts according to Comparative Examples, platinum was in the form of particles even at low loading of 1 wt%.

In addition, CO-DRIFT spectrum graphs for the platinum-supported catalysts (MPtA) according to Examples (solid-state reaction) and the platinum-supported catalysts (Pt/gA) according to Comparative Examples (impregnation) with platinum supported in various amounts are shown in FIG. 3.

As shown in the drawings, in the catalysts according to Examples, peaks were formed at 2090 cm⁻¹, 2070 cm⁻¹, and 2040 cm⁻¹. However, in the catalysts according to Comparative Examples, the peak at 2060 cm⁻¹ corresponding to the peak at 2070 cm⁻¹ was formed relatively larger, and the peak at 2090 cm⁻¹ corresponding to single atoms was hardly observed even at platinum loading of 1 wt%.

H₂-TPD results for the platinum-supported catalysts (MPtA) according to Examples (solid-state reaction) and the platinum-supported catalysts (Pt/gA) according to Comparative Examples (impregnation) with platinum supported in various amounts (1 wt%, 2 wt%, 3 wt%, and 5 wt%) are graphed in FIG. 4.

Referring to the drawing, based on results of comparison of the extent of hydrogen desorption depending on the amount of platinum by H₂-TPD, in the catalysts according to Examples, the hydrogen desorption peak tended to shift from 500°C to around 200°C with an increase in the amount of platinum. However, little change in the desorption range was observed in the catalysts according to Comparative Examples.

In order to more accurately analyze the form of platinum, EXAFS was performed, and the results thereof are shown in Table 1 below and FIG. 5.

As shown in the table and the drawings, when compared with the fitting results of Pt foil and PtO₂, which are reference materials, the catalysts according to Examples showed a pattern almost similar to PtO₂ even when the amount of platinum increased, whereas the catalysts according to Comparative Examples showed a pattern similar to that of Pt foil.

**[Table 1]**

| Classification | Catalyst | Neighbor | N | R (Å) | σ² (Å²) | ΔE₀ (eV) | R-factor |
|---|---|---|---|---|---|---|---|
| Comparative Example 1 | Pt foil | Pt-Pt | 12* | 2.761 ± 0.003 | 0.004 | 7.2 ± 0.7 | 0.012 |
| Comparative Example 2 | PtO₂ | Pt-O | 6* | 2.017 ± 0.008 | 0.001 | 10.3 ± 1.0 | 0.016 |
| | | Pt-O-Pt | 6* | 3.108 ± 0.008 | 0.002 | | |
| Comparative Example 3 | 1Pt/gA 600 5h | Pt-O | 2.5 ± 0.5 | 1.973 ± 0.014 | 0.003 | 9.3 ± 1.2 | 0.016 |
| | | Pt-Pt | 5.7 ± 0.8 | 2.768 ± 0.007 | 0.005 | | |
| Comparative Example 4 | 3Pt/gA 600 5h | Pt-O | 2.1 ± 0.7 | 1.992 ± 0.020 | 0.005 | 9.4 ± 1.1 | 0.012 |
| | | Pt-Pt | 6.9 ± 0.8 | 2.771 ± 0.005 | 0.005 | | |
| Comparative Example 5 | 5Pt/gA 600 5h | Pt-O | 1.5 ± 0.5 | 1.974 ± 0.018 | 0.005 | 10.8 ± 0.8 | 0.008 |
| | | Pt-Pt | 6.9 ± 0.6 | 2.761 ± 0.004 | 0.005 | | |
| Example 1 | M1PtA 600 5h | Pt-O | 5.1 ± 0.7 | 1.995 ± 0.013 | 0.001 | 11.0 ± 1.7 | 0.025 |
| | | Pt-O-Al | 1.7 ± 0.9 | 2.882 ± 0.039 | 0.003 | | |
| | | Pt-O-Pt | 1.6 ± 1.6 | 3.194 ± 0.054 | 0.003 | | |
| Example 2 | M3PtA 600 5h | Pt-O | 4.0 ± 0.6 | 2.008 ± 0.015 | 0.002 | 13.1 ± 1.8 | 0.014 |
| | | Pt-Pt | 2.7 ± 0.5 | 2.769 ± 0.015 | 0.003 | | |
| | | Pt-O-Pt | 3.0 ± 1.4 | 3.210 ± 0.032 | 0.003 | | |
| Example 3 | M5PtA 600 5h | Pt-O | 1.7 ± 0.3 | 1.980 ± 0.011 | 0.002 | 3.9 ± 1.5 | 0.027 |
| | | Pt-Pt | 5.9 ± 1.0 | 2.671 ± 0.014 | 0.015 | | |

As is apparent from the table above, many Pt-Pt bonds were observed in the catalysts according to Comparative Examples, whereas in the catalysts according to Examples, large numbers of Pt-O, Pt-O-Pt, and Pt-O-Al bonds were observed when the amount of platinum was low, and the number of Pt-Pt bonds tended to increase with an increase in the amount of platinum.

### Analysis of reaction activity

The results of comparing efficiencies of hydrogenation (reaction conditions: M/R of 0.22 mol%, 35 bar, 150°C, and 2 hours) and dehydrogenation (reaction conditions: M/R of 0.1 mol%, 250°C, and 4 hours) in the presence of the prepared catalysts according to Examples and Comparative Examples are shown in Tables 2 and 3 below and in FIG. 6.

**[Table 2]**

| Classification | Catalyst | H₀-BT conversion [mol%]^{a} | H₁₂-BT selectivity [mol%]^{a} | H₂ storage efficiency [mol%]^{b} |
|---|---|---|---|---|
| Comparative Example 1 | 1Pt/gA 600 5h | 88.4 | 77.8 | 78.6 |
| Comparative Example 2 | 2Pt/gA 600 5h | 81.7 | 70.4 | 69.6 |
| Comparative Example 3 | 3Pt/gA 600 5h | 77.4 | 61.7 | 62.6 |
| Comparative Example 4 | 5Pt/gA 600 5h | 64.5 | 53.3 | 49.4 |
| Example 1 | M1PtA 600 5h | 78.9 | 58.5 | 62.5 |
| Example 2 | M2PtA 600 5h | 95.4 | 92.7 | 92.0 |
| Example 3 | M3PtA 600 5h | 96.7 | 99.7 | 96.2 |
| Example 4 | M5PtA 600 5h | 85.4 | 80.0 | 76.9 |

| | | | | |
|---|---|---|---|---|
| ^{a}: Calculation result by GC analysis. ^{b}: Hydrogen storage efficiency = (full hydrogenation product [mol] x 6H₂ + single-ring hydrogenation product [mol] x 3H₂)/(reactant [mol] x 6H₂) x 100% | | | | |

**[Table 3]**

| Classification | Catalyst | H₁₂-BT conversion [mol%]^{a} | H₀-BT selectivity [mol%]^{a} | H₂ release efficiency [mol%]^{b} |
|---|---|---|---|---|
| Comparative Example 1 | 1Pt/gA 600 5h | 78.2 | 84.9 | 72.3 |
| Comparative Example 2 | 2Pt/gA 600 5h | 70.4 | 80.4 | 63.5 |
| Comparative Example 3 | 3Pt/gA 600 5h | 60.1 | 79.2 | 53.8 |
| Comparative Example 4 | 5Pt/gA 600 5h | 50.4 | 29.8 | 32.7 |
| Example 1 | M1PtA 600 5h | 38.8 | 74.0 | 33.7 |
| Example 2 | M2PtA 600 5h | 76.5 | 83.4 | 70.2 |
| Example 3 | M3PtA 600 5h | 88.0 | 86.2 | 81.9 |
| Example 4 | M5PtA 600 5h | 79.2 | 58.5 | 62.8 |

| | | | | |
|---|---|---|---|---|
| ^{a}: Calculation result by GC analysis. ^{b}: Hydrogen release efficiency = (full dehydrogenation product [mol] x 6H₂ + single-ring dehydrogenation product [mol] x 3H₂)/(reactant [mol] x 6H₂) x 100% | | | | |

Referring to the above results, in the catalysts according to Examples, the catalyst with 3 wt% of platinum supported showed the best activity in both hydrogenation and dehydrogenation. In the catalysts according to Comparative Examples, the catalyst with 1 wt% of platinum supported showed the best activity, which is deemed to be because the size of platinum increased with an increase in the amount of platinum supported. In particular, this difference in activity is believed to be due to different sizes of platinum particles supported on the alumina support depending on the catalyst preparation method.

### B. Analysis of properties and reaction activity of catalyst depending on firing conditions

### Analysis of catalyst properties

On basis of firing conditions of 600°C and 5 h (heating rate: 2 °C/min), the conditions were changed to 5 h (heating rate: 10 °C/min), 20 h (heating rate: 2 °C/min), and 40 h (heating rate: 2 °C/min), and also changes in the sizes of the platinum catalysts supported in amounts of 1 wt% and 3 wt% were observed. The XRD patterns, H₂-TPD results, and HAADF-STEM images for the Pt-supported catalysts (loading: 1 wt% and 3 wt%) depending on changes in firing conditions are shown in FIGs. 7 and 8.

Based on results of XRD in the drawings, the Pt (111) peak increased for both the platinum catalysts with 1 wt% and 3 wt% supported when the firing temperature (600°C) and the firing time (5 h) were fixed and the heating rate was changed from 2 °C/min to 10 °C/min. Additionally, when the firing temperature (600°C) and the heating rate (2 °C/min) were fixed and the firing time was changed from 5 hours to 20 hours and 40 hours, the Pt (111) peak of both the platinum catalysts with 1 wt% and 3 wt% supported was small but relatively increased compared to the change in the heating rate. Additionally, according to H₂-TPD analysis, the hydrogen desorption peak shifted to lower temperatures with an increase in the platinum size.

Also, as confirmed in the results of HAADF-STEM according to FIG. 8, for the M1PtA (same as M1PtA c600 5h_2) catalyst in FIG. 2, platinum single atoms were mainly observed, but when the firing time was 40 h and the heating rate was increased to 10°C/min, the proportion of clusters increased and the form of particles was also observed. Taking into consideration the above results, metal crystallinity was affected by the firing conditions, which is regarded as the main variable capable of controlling the size of platinum.

### Analysis of reaction activity

The hydrogenation and dehydrogenation activities of the Pt-supported catalysts were measured depending on changes in firing conditions, and the results thereof are shown in Table 4 below (hydrogenation conditions: M/R of 0.22 mol%, 35 bar, 150°C, and 2 hours) and Table 5 below (dehydrogenation conditions: M/R of 0.1 mol%, 250°C, and 4 hours) and in FIG. 9.

**[Table 4]**

| Classification | Catalyst | H₀-BT conversion [mol%]^{a} | H₁₂-BT selectivity [mol%]^{a} | H₂ storage efficiency [mol%]^{b} |
|---|---|---|---|---|
| Example 1 | M1PtA c600 5h_2 | 78.9 | 58.5 | 62.5 |
| Example 2 | M3PtA c600 5h_2 | 96.7 | 99.7 | 96.2 |
| Example 3 | M1PtA c600 40h_2 | 85.3 | 76.4 | 75.2 |
| Example 4 | M1PtA c600 5h_10 | 80.3 | 72.2 | 69.1 |
| Example 5 | M3PtA c600 40h_2 | 97.2 | 98.1 | 96.3 |
| Example 6 | M3PtA c600 5h_10 | 80.1 | 62.4 | 65.0 |

| | | | | |
|---|---|---|---|---|
| ^{a}: Calculation result by GC analysis. ^{b}: Hydrogen storage efficiency = (full hydrogenation product [mol] x 6H₂ + single-ring hydrogenation product [mol] x 3H₂)/(reactant [mol] x 6H₂) x 100% | | | | |

**[Table 5]**

| Classification | Catalyst | H₁₂-BT conversion [mol%]^{a} | H₀-BT selectivity [mol%]^{a} | H₂ release efficiency [mol%]^{b} |
|---|---|---|---|---|
| Example 1 | M1PtA c600 5h_2 | 38.8 | 74.0 | 33.7 |
| Example 2 | M3PtA c600 5h_2 | 88.0 | 86.2 | 81.9 |
| Example 3 | M1PtA c600 20h_2 | 86.4 | 78.8 | 77.2 |
| Example 4 | M1PtA c600 40h_2 | 90.1 | 85.4 | 83.5 |
| Example 5 | M1PtA c600 5h_10 | 72.4 | 69.8 | 61.5 |
| Example 6 | M3PtA c600 20h_2 | 90.3 | 86.3 | 84.1 |
| Example 7 | M3PtA c600 40h_2 | 91.4 | 89.8 | 86.7 |
| Example 8 | M3PtA c600 5h_10 | 65.7 | 53.8 | 50.5 |

| | | | | |
|---|---|---|---|---|
| ^{a}: Calculation result by GC analysis. ^{b}: Hydrogen release efficiency = (full dehydrogenation product [mol] x 6H₂ + single-ring dehydrogenation product [mol] x 3H₂)/(reactant [mol] x 6H₂) x 100% | | | | |

Referring to the tables above and the drawings, the M1PtA c600 5h_2 catalyst with a high proportion of platinum single atoms showed storage efficiency of 62.5% and release efficiency of 33.7% in hydrogenation and dehydrogenation. On the other hand, in the M1PtA c600 40h_2 catalyst in which the firing time was increased during catalyst preparation, storage efficiency and release efficiency were improved to 75.2% and 83.5%, respectively.

### C. Analysis of stability of catalyst depending on synthesis method

### Evaluation of dehydrogenation activity and change in properties of catalyst after use

To evaluate the long-term stability of the catalyst, the activity of dehydrogenation was evaluated. The results of dehydrogenation for evaluating the long-term stability of the platinum-supported catalyst (M3PtA) according to Example (solid-state reaction) and the platinum-supported catalyst (3Pt/gA) according to Comparative Example (impregnation) are shown in FIG. 10. In addition, XRD patterns before and after reaction of the platinum-supported catalyst (M3PtA) according to Example and the platinum-supported catalyst (3Pt/gA) according to Comparative Example and HAADF-STEM images of the catalysts after use are shown in FIG. 11.

Referring to the drawing, the catalytic activity of the catalyst (3Pt/gA) according to Comparative Example rapidly decreased upon 5 cycles of reuse. Moreover, in case of the catalyst (M3PtA) according to Example, based on results of XRD and HAADF-STEM of the state of metal particles of the catalyst after reaction, the XRD patterns before and after use were almost the same. Further, based on results of STEM analysis, platinum single atoms and clusters were still relatively unevenly distributed. This is deemed to be because the interaction between platinum and the alumina support is strong in the catalyst (M3PtA) according to Example. In case of the 3Pt/gA catalyst, however, the initial hydrogen release efficiency (55.7%) was decreased by about half, to 27.4% upon 5 cycles of reuse. This is deemed to be because the interaction between platinum and the alumina support was weakened and the particle size increased due to sintering of platinum.

### Evaluation of hydrogenation/dehydrogenation reversibility

Since platinum is active in both hydrogenation and dehydrogenation, hydrogen storage and release efficiencies may be achieved even when using the same type of catalyst in a single reactor. As such, it was judged that continuous reversible reaction would be affected because the interaction between the active metal and the support varied depending on the synthesis method, so hydrogenation and dehydrogenation were repeated in three sets in succession. In this regard, the results of measuring and comparing the hydrogen storage and release efficiencies of H₀-BT for the catalyst (M3PtA) according to Example and the catalyst (3Pt/gA) according to Comparative Example are shown in FIG. 12.

Referring to the drawing, the catalyst (M3PtA) according to Example continuously maintained the initial hydrogen storage and release efficiencies under the same hydrogenation and dehydrogenation conditions, whereas the catalyst (3Pt/gA) according to Comparative Example continuously decreased hydrogen storage and release efficiencies.

### D. Evaluation of dehydrogenation activity depending on type of liquid organic hydrogen carrier

Dehydrogenation was performed using various types of pyridine- and bipyridine-based liquid organic hydrogen carriers, and the results thereof are shown in Table 6 below.

**[Table 6]**

| Chemical formula of reactant | Reacta nt | Examp le | Catalyst | M/R (%) | Temper ature (°C) | Reacti on time (h) | Reaction efficien cy (%) |
|---|---|---|---|---|---|---|---|
| 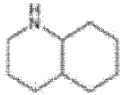 | H₁₀-quinol in | Examp le 1 | M3PtA_60 0 5h | 0.1 | 250 | 4 | 53.5 |
| | | Comp. Examp le 1 | 3Pt/gA_6 00 5h | 0.1 | 250 | 4 | 43.3 |
| 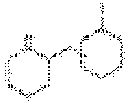 | H₁₂-MBP | Examp le 2 | M3PtA_60 0 5h | 0.1 | 250 | 4 | 64.1 |
| | | Comp. Examp le 2 | 3Pt/gA_6 00 5h | 0.1 | 250 | 4 | 54.8 |
| 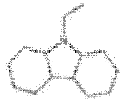 | H₁₂-NEC | Examp le 3 | M3PtA_60 0 5h | 0.1 | 250 | 4 | 56.5 |
| | | Comp. Examp le 3 | 3Pt/gA_6 00 5h | 0.1 | 250 | 4 | 49.7 |
| 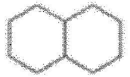 | H₁₀-decali n | Examp le 4 | M3PtA_60 0 5h | 0.1 | 250 | 4 | 46.2 |
| | | Comp. Examp le 4 | 3Pt/gA_6 00 5h | 0.1 | 250 | 4 | 30.7 |
| 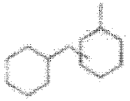 | H₁₂-BT | Examp le 5 | M3PtA_60 0 5h | 0.1 | 250 | 4 | 83.1 |
| | | Comp. Examp le 5 | 3Pt/gA_6 00 5h | 0.1 | 250 | 4 | 52.3 |
| 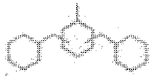 | H₁₈-DBT | Examp le 6 | M3PtA_60 0 5h | 0.9 | 290 | 4 | 86.9 |
| | | Comp. Examp le 6 | 3Pt/gA_6 00 5h | 2.4 | 290 | 4 | 84.4 |

As is apparent from the table above, the reaction efficiency in the presence of the catalyst (M3PtA 600 5h) according to Example was improved compared to the catalyst (3Pt/gA 600 5h) according to Comparative Example regardless of the type of liquid organic hydrogen carrier.

### E. Evaluation of dehydrogenation activity depending on amount (proportion) of platinum clusters in catalyst

Platinum-supported catalysts were prepared by solid-state reaction while changing heat treatment conditions (heat treatment temperature, time, and heating rate) (platinum loading: 1 wt%, 3 wt%, and 5 wt%). As such, the amount of clusters in the supported platinum was calculated by measuring respective numbers of single atoms and clusters (additionally nanoparticles larger than clusters) from dark-field HAADF-STEM images. The results thereof are shown in Table 7 below (reaction conditions: 250°C, 1 bar, 4 hours, and noble metal (mol)/reactant (mol) of 0.1%).

**[Table 7]**

| Catalyst | Number of single atoms | Number of clusters | Number of nanoparticles | Amount of clusters (%) | H₂ release efficiency (mol%) |
|---|---|---|---|---|---|
| M1PtA^{a} | 20 | 1 | 0 | 4.8 | 36.2 |
| M2PtA^{a} | 31 | 6 | 0 | 16.2 | 70.8 |
| M3PtA^{a} | 30 | 10 | 1 | 24.4 | 83.1 |
| M5PtA^{a} | 27 | 8 | 5 | 20.0 | 65.0 |
| M1PtA^{bl} | 22 | 6 | 0 | 21.4 | 81.9 |
| M1PtA^{b2} | 28 | 18 | 0 | 39.1 | 61.3 |
| M3PtA^{b1} | 48 | 14 | 0 | 22.6 | 86.9 |
| M3PtA^{b2} | 11 | 18 | 4 | 54.5 | 49.8 |
| M5PtA^{b2} | 10 | 23 | 4 | 62.2 | 35.2 |

In the table above, the firing conditions corresponding to "a" are 600°C and 5 h (heating rate: 2°C/min), the firing conditions corresponding to "b1" are 600°C and 40 h (heating rate: 2°C/min), and the firing conditions corresponding to "b2" are 600°C and 5 h (heating rate: 10°C/min).

As is apparent from the table above, when the amount of clusters in the supported platinum was too low (M1PtA^{a}: 4.8%) or when the amount of clusters was too high (M5PtA^{b2}: 62.2%), respective hydrogen release efficiencies were low at 36.2% and 35.2%. However, when the amount of clusters was adjusted in an appropriate range, good hydrogen release efficiency was obtained. In particular, high hydrogen release efficiency of 86.9% was obtained in the presence of the M3PtA^{b1} catalyst (amount of clusters: 22.6%).

Simple modifications or changes of the present disclosure may be easily used by those of ordinary skill in the art, and all such modifications or changes may be considered to be included in the scope of the present disclosure.

## Claims

1. A catalyst for hydrogenation/dehydrogenation of a liquid organic hydrogen carrier, comprising:
an alumina support, and
platinum comprising platinum single atoms and clusters as an active metal supported on the alumina-containing support,
wherein an amount of platinum in the catalyst is in a range of 0.01 to 10 wt%, on an elemental basis, and
an amount of platinum clusters in the supported platinum is in a range of 10 to 55%.

2. The catalyst according to claim 1, wherein the platinum in the catalyst has a size of 5 nm or less.

3. The catalyst according to claim 1, wherein the alumina support in the catalyst has a BET specific surface area of at least 300 m²/g, a pore volume of 0.4 to 0.55 cm³/g, and a pore size of 3 to 4.5 nm.

4. The catalyst according to claim 1, wherein the amount of platinum clusters in the supported platinum is 22 to 30%.

5. The catalyst according to claim 1, wherein the catalyst contains platinum crystallites having a (111) plane and is in a reduced state.

6. A method for preparing a catalyst for hydrogenation/dehydrogenation of a liquid organic hydrogen carrier, comprising:
a) forming a gel-type catalytic solid by performing solid-state reaction without use of a solvent while applying external energy to a mixture containing at least one alumina precursor, at least one platinum precursor, and a base; and
b) supporting platinum comprising platinum single atoms and clusters on an alumina-containing support by heat-treating the catalytic solid under an oxygen-containing atmosphere,
wherein an amount of platinum in a range of 0.01 to 10 wt%, on an elemental basis, and
an amount of platinum clusters in the supported platinum is in a range of 10 to 55%.

7. The method according to claim 6, wherein, during the heat-treating in step b), a heat treatment temperature is adjusted in a range of 300 to 800°C, a heating rate is adjusted in a range of 1 to 15 °C/min, and a heat treatment time is adjusted in a range of 3 to 60 hours.

8. The method according to claim 6, further comprising:
c) converting platinum into a fully reduced state or a partially reduced state by reducing the heat-treated catalyst solid,
wherein a reduction treatment temperature is adjusted in a range of 300 to 600°C, a heating rate is adjusted in a range of 1 to 10 °C/min, and a reduction treatment time is adjusted in a range of 1 to 10 hours.

9. The method according to claim 6, wherein a molar ratio of the platinum precursor/the base in step a) is in a range of 0.0001 to 0.1.

10. A method for storing or releasing hydrogen, comprising:
a hydrogenation step of storing hydrogen in a liquid organic hydrogen carrier in presence of a catalyst; and
a dehydrogenation step of releasing hydrogen from the hydrogenated liquid organic hydrogen carrier in the presence of a catalyst,
wherein the catalyst used in at least one of the hydrogenation step and the dehydrogenation step comprises:
an alumina support, and
platinum comprising platinum single atoms and clusters as an active metal supported on the alumina-containing support,
wherein the amount of platinum in the catalyst is in a range of 0.01 to 10 wt%, on an elemental basis, and the amount of platinum clusters in the supported platinum is in a range of 10 to 55%, and
hydrogen is stored or released by alternately performing the hydrogenation step and the dehydrogenation step.

11. The method according to claim 10, wherein the liquid organic hydrogen carrier is at least one selected from among compounds represented by General Formulas 1 to 9 below: 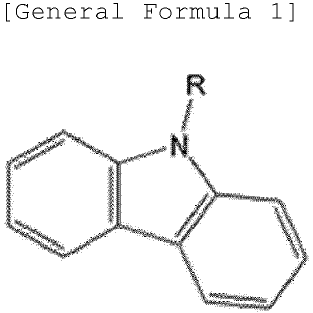 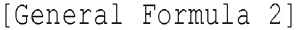 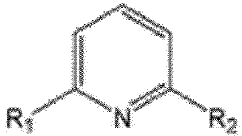 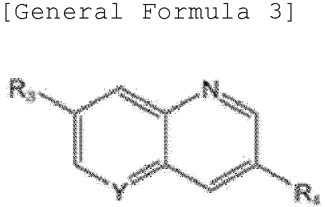 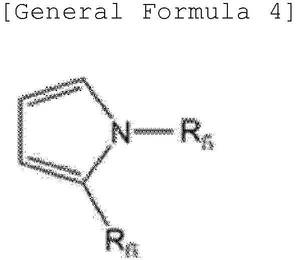 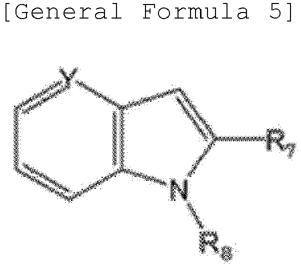 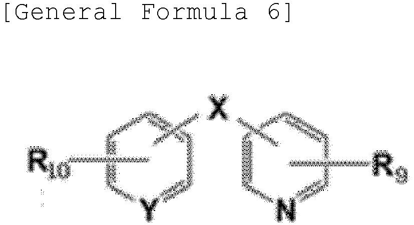 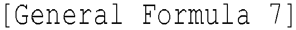 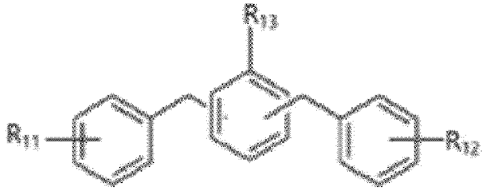 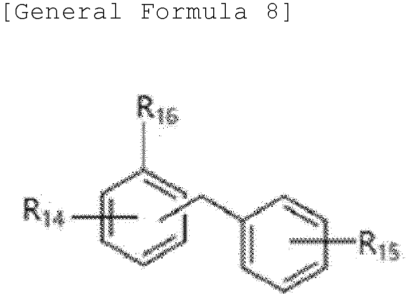 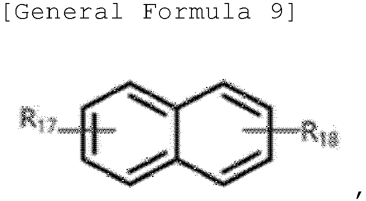 wherein R, R₁, R₂, R₃, R₄, R₅, R₆, R₇, R₈, R₉, R₁₀, R₁₁, R₁₂, R₁₃, R₁₄, R₁₅, R₁₆, R₁₇, and R₁₈ are each hydrogen or a C₁-C₆ alkyl group, X is -(CHR₁₉)ₙ- (in which n is an integer from 1 to 3, and R₁₉ is H, OH, or a C₁-C₆ alkyl group), and Y is CH or N.

12. The method according to claim 11, wherein the liquid organic hydrogen carrier has a melting point of 100°C or less and a boiling point of 380°C or less.

13. The method according to claim 10, wherein a ratio of the active metal (Pt) in the catalyst/the liquid organic hydrogen carrier (M/R) is adjusted in a range of 0.05 to 0.4 mol%.

14. The method according to claim 13, wherein the ratio of M/R in the hydrogenation step is adjusted in the range of 0.1 to 0.4 mol%, and the ratio of M/R in the dehydrogenation step is adjusted in the range of 0.05 to 0.15 mol%.

15. The method according to claim 14, wherein the hydrogenation step is performed under conditions of a temperature of 50 to 250°C and a pressure of 5 to 100 bar, and the dehydrogenation step is performed under conditions of a temperature of 100 to 350°C and a pressure of 1 to 10 bar.

16. The method according to claim 10, wherein hydrogenation efficiency in the hydrogenation step is at least 62%, and dehydrogenation efficiency in the dehydrogenation step is at least 50%.
